# EUROPÄISCHE PATENTSCHRIFT

(11) **EP 2 469 051 B1**
(45) Veröffentlichungstag und Bekanntmachung des Hinweises auf die Patenterteilung: **12.08.2015**
(21) Anmeldenummer: 11009786.2
(22) Anmeldetag: 12.12.2011
(51) Int. Cl.: F01N 3/022, F01N 3/035

(54) **Abgasreinigungseinrichtung**
Waste gas cleaning device
Dispositif de nettoyage de gaz d'échappement

(30) Priorität: 22.12.2010 DE 202010016906 U; 21.02.2011 DE 102011011913
(43) Veröffentlichungstag der Anmeldung: 27.06.2012
(73) Patentinhaber: Burkhardt, Armin, 77776 Bad Rippoldsau - Schapbach (DE)
(72) Erfinder: Burkhardt, Armin, 77776 Bad Rippoldsau - Schapbach (DE)
(74) Vertreter: Schlotter, Alexander Carolus Paul

(56) Entgegenhaltungen:
- EP-A1- 1 452 703
- EP-A2- 1 398 069
- DE-A1- 4 029 383
- DE-C1- 4 230 667
- JP-A- 2003 155 910
- US-A1- 2006 075 731
- US-A1- 2007 039 295

## Beschreibung

Die vorliegende Erfindung betrifft eine Abgasreinigungseinrichtung nach dem Oberbegriff des Anspruchs 1, insbesondere zur Reinigung von Abgasen von Kraftfahrzeugen.

Zur Schonung der Umwelt ist es bekannt und in vielen Ländern gesetzlich vorgeschrieben, Abgase, beispielsweise von Dieselmotoren, von Ruß und ähnlichen Partikeln möglichst weitgehend zu reinigen.

Hierzu sind insbesondere sogenannte Wandstromfilter bekannt, bei denen das mit den Rußpartikeln versetzte Abgas bei der Durchdringung einer porösen Filterwand gefiltert wird. Bekannte Wandstromfilter weisen jedoch sowohl in der Herstellung als auch im Betrieb Nachteile auf.

Aus der DE 40 29 383 A1 ist ein Körper bekannt, der aus mehreren getrockneten Schaumstoffteilen zusammengesetzt wird, in denen miteinander fluchtende Kanäle ausgebildet sind. Zwischen den Schaumstoffteilen ist ein mit Schlicker getränktes Faservlies angeordnet. Medium diffundiert radial durch Kanalwände benachbarter Kanäle.

Aufgabe der vorliegenden Erfindung ist es daher, eine verbesserte Abgasreinigungseinrichtung zur Verfügung zu stellen.

Zur Lösung dieser Aufgabe ist eine Abgasreinigungseinrichtung nach dem Oberbegriff des Anspruchs 1 durch dessen kennzeichnendes Merkmal weitergebildet. Vorteilhafte Ausführungsformen sind Gegenstand der Unteransprüche.

Eine erfindungsgemäße Abgasreinigungseinrichtung, die vorzugsweise als Abgasreinigungseinrichtung für ein Kraftfahrzeug und insbesondere als Rußpartikelfilter für ein Kraftfahrzeug mit Dieselmotor verwendet werden kann, weist ein Gehäuse auf. Dieses kann insbesondere aus Metall, vorzugsweise Stahlblech, hergestellt sein, und weist in einer bevorzugten Ausführung einen im Wesentlichen elliptischen, insbesondere kreisförmigen Querschnitt auf. An einer Eintrittsstirnseite des Gehäuses kann in einer bevorzugten Ausführung ein divergenter, insbesondere kegelförmiger Eintrittstutzen vorgesehen sein, der mit einer Abgasleitung verbindbar ist, um das aus einer Abgasleitung zugeführte Abgas auf die größere Querschnittsfläche im Gehäuse zu verteilen. Entsprechend kann auf der Austrittstirnseite des Gehäuses ein konvergenter, insbesondere kegelförmiger, Austrittstutzen vorgesehen sein, um das gereinigte Abgas zu sammeln.

In dem Gehäuse sind einerseits Abgaszuführkanäle angeordnet, die eine der Eintrittstirnseite des Gehäuses zugewandte offene Stirnseite und eine gegenüberliegende, der Austrittstirnseite des Gehäuses zugewandte geschlossene Stirnseite aufweisen. Zusätzlich sind im Gehäuse Abgasabführkanäle angeordnet, die umgekehrt eine zur Austrittsstirnseite des Gehäuses offene Stirnseite und eine gegenüberliegende, der Eintrittsstirnseite des Gehäuses zugewandte, strömungstechnisch wenigstens im Wesentlichen, geschlossene Stirnseite aufweisen. Vorzugsweise sind Abgaszu- und -abführkanäle wechselweise angeordnet. Darunter wird vorliegend insbesondere verstanden, dass in einer Querschnittsebene des Gehäuses einem Abgaszuführkanal ein oder mehrere Abgasabführkanäle benachbart sind und/oder einem Abgasabführkanal ein oder mehrere Abgaszuführkanäle benachbart sind. Abgas- und -abführkanäle können somit beispielsweise schachbrettartig oder in konzentrischen Kreisen um eine Gehäusemittelachse angeordnet sein, wobei ein konzentrischer Kreis gleichermaßen nur Abgaszuführkanäle, nur Abgasabführkanäle oder sowohl Abgaszu- als auch -abführkanäle enthalten kann. Auch andere Anordnungen der Abgaszu- und -abführkanäle relativ zu einander sind möglich, insbesondere stochastisch verteilte oder regellose Abgaszu- und -abführkanäle, solange dort vorzugsweise wenigstens im Wesentlichen jeder Abgaszuführkanal (wenigstens) einem Abgasabführkanal benachbart ist. Bei gattungsgemäßen Wandstromfiltern strömt Abgas eintrittsseitig in das Gehäuse und dort durch ihre offenen Stirnseiten in den Abgaszuführkanäle ein. Da es an den gegenüberliegenden geschlossenen Stirnseiten der Abgaszuführkanäle nicht austreten kann, tritt es über die Kanallänge radial aus den Abgaszuführkanälen aus und in benachbarte Abgasabführkanäle ein. In diesen kann es nur durch die zur Austrittsseite des Gehäuses hin offenen Stirnseiten austreten. Beim radialen Ausströmen aus den Abgaszuführkanälen und/oder dem radialen Einströmen in die Abgasabführkanäle wird das Abgas von Partikeln, insbesondere Rußpartikeln, gefiltert. Hierzu sind die Abgaszu- und/oder -abführkanäle in einer bevorzugten Ausführung aus einem porösem Werkstoff, insbesondere Keramik, der von dem Abgas durchströmt werden kann, die zu filternden Partikel jedoch, wenigstens in einem gewünschten Maß, abfängt.

Erfindungsgemäß sind einige oder vorzugsweise alle Abgaszu- und/oder -abführkanäle axial mehrteilig ausgebildet, d. h. weisen zwei oder mehr axial aufeinanderfolgende Teile auf, die zusammen den jeweiligen Kanal bilden bzw. definieren. Diese axial mehrteilige Gestaltung weist mehrere Vorteile auf: Zum einen können die Kanäle modular und mithin aus einfachen Grundteilen in beliebiger Länge einfach hergestellt werden. Zum anderen können einander zugewandte Stirnseiten von aufeinanderfolgenden Kanalteilen so aneinander angepasst sein, dass zwischen ihnen ein gasdurchlässiger Spalt entsteht. Dieser kann sich in einer bevorzugten Ausführung wenigstens über einen Teil des Kanalumfangs erstrecken, insbesondere also als Ringspalt ausgebildet sein. Gleichermaßen kann sich ein zwischen zwei Kanalteilen gebildeter Spalt auch im Wesentlichen in radialer Richtung erstrecken.

Dieses gasdurchlässigen Spalte können zusätzlich oder alternativ zu einer porösen Ausgestaltung der einzelnen axialen Kanalteile einen radialen Gasdurchtritt von Abgaszu- und -abführkanälen ermöglichen. Vorzugsweise erfolgt auch hier eine Filterung des Abgases auf Partikel, insbesondere Rußpartikel. Dazu ist der gasdurchlässige Spalt in einer bevorzugten Ausführung derart ausgebildet, das Partikel im Abgasstrom durch den Kanal, die größer sind als 200 nm, zu einem bestimmten Prozentsatz, vorzugsweise wenigstens im Wesentlichen überhaupt nicht, durch den Spalt treten. Ebenso wie die Poren von Kanalteilen müssen auch die Spalte dabei nicht zwangsläufig kleiner sein als die Partikel, da Partikel auch durch Adhäsion an der porösen Kanalwand bzw. dem Spalt haften können.

In einer bevorzugten Ausführung sind ein oder mehrere, vorzugsweise alle Abgaszu- und/oder -abführkanäle aus zwei oder mehr Hülsen axial zusammengesetzt. Diese Hülsen, die vorzugsweise einen wenigstens im Wesentlichen ringförmigen Querschnitt aufweisen, sind in einer bevorzugten Ausführung aus einem porösen Werkstoff, insbesondere einem Keramikwerkstoff. Solche Hülsen können vorteilhafter weise als Massenware zur Verfügung gestellt werden und zur Herstellung auf Führungseinrichtungen, beispielsweise Stäbe, gefädelt werden, die nach einer Fixierung der einzelnen Hülsen im Gehäuse vorzugsweise wieder entfernt werden, um das Kanalinnere freizugeben.

In einer alternativen Gestaltung können zwei oder mehr Scheiben, die in gleicher Weise bevorzugt einen porösen Werkstoff, insbesondere Keramik als einen Bestandteil aufweisen, axial aneinandergefügt werden, so dass Durchgangsöffnungen in den einzelnen Scheiben, die vorzugsweise zusammen mit den Scheiben urgeformt, aber auch vor oder nach dem axialen Zusammenfügen der Scheiben, beispielsweise spanend, hergestellt werden können, miteinander fluchten und so Abgaszu- und/oder -abführkanäle definieren.

Erfindungsgemäß sind einander zugewandte Stirnseiten von axial aneinandergefügten Kanalteilen aneinander angepasst, insbesondere wenigstens im Wesentlichen komplementär zueinander ausgebildet, so dass sie, wenigstens teilweise, formschlüssig ineinander greifen. Dies ermöglicht gleichermaßen eine gewisse radiale Fixierung der einzelnen axialen Kanalteile aneinander und zugleich eine Beeinflussung eines zwischen diesen ausgebildeten Spaltes. Komplementäre Stirnseiten können beispielsweise durch kegelförmige oder gerundete, insbesondere sphärische beziehungsweise kugelförmige Aussparrungen zur Aufnahme entsprechender kegelförmiger bzw. gerundeter, insbesondere kugelförmiger Vorsprünge gebildet sein.

Wenn Kanalteile als, insbesondere ringförmige, Hülsen ausgebildet sind, kann eine Hülse also beispielsweise auf einer Stirnseite radial außen einen kegelförmigen Absatz bzw. eine Fase oder einen Außenradius und auf der gegenüberliegenden Seite radial innen einen entsprechenden kegelförmigen Absatz bzw. Innenradius aufweisen, so dass eine benachbarte gleichartige Hülse mit ihrem Außenabsatz bzw. -radius in den Innenabsatz bzw. -radius der ersten Hülse formschlüssig eingreifen kann.

Sind Kanalteile als Scheiben ausgebildet, ist in einer bevorzugten Ausführung vorgesehen, dass wenigstens auf einer Scheibenstirnseite Vorsprünge hervorragen, die die Durchgangsöffnungen durchgreifen. Diese Vorsprünge können beispielsweise kegel- oder halbkugelförmig ausgebildet sein. In einer bevorzugten Ausführung erstrecken sie sich jeweils wenigstens im Wesentlichen zylinderförmig um die einzelnen Durchgangsöffnungen und weisen an ihrer scheibenfernen Stirnseite eine Fase oder einen Radius auf, um in entsprechende Aussparungen der benachbarten Scheibe formschlüssig einzugreifen. Die axial aneinandergefügten Scheiben liegen dann vorzugsweise nicht plan aufeinander auf, sondern werden durch die axialen Vorsprünge axial voneinander beabstandet, um den radialen Gasübertritt zwischen Abgaszu- und -abführkanälen zu erleichtern und zu steuern.

In einer bevorzugten Ausführung werden die einzelnen axialen Kanalteile, insbesondere Hülsen oder Scheiben, dadurch im Gehäuse fixiert, dass sie in einem Werkstoff angeordnet sind, der in einer bevorzugten Ausführung wenigstens in einem axial mittleren Gehäuseabschnitt den Raum zwischen den Kanälen und dem Gehäuse, insbesondere radial und/oder axial, wenigstens im Wesentlichen ausfüllt und die Kanäle so abstützt. Bevorzugt haften die Kanäle an dem Werkstoff, so dass dieser sie auch axial fixiert. Der Werkstoff kann insbesondere Kanäle gegen Vibrationen sichern, wie sie bei Rußpartikeifiltern von Kraftfahrzeugen im Betrieb auftreten.

Um den einleitend erläuterten Gasübertritt zwischen Abgaszu- und -abführkanälen zu verbessern beziehungsweise zu ermöglichen und vorzugsweise auch zu steuern, ist der Werkstoff vorzugsweise porös, so dass er von dem Abgas durchströmt werden kann. Dabei kann der poröse Werkstoff der Gasdurchströmung einen Strömungswiderstand entgegensetzen, wodurch der Gasübertritt zwischen Abgaszu- und -abführkanälen beeinflusst werden kann.

In einer bevorzugten Ausführung ist der Werkstoff ein Keramikwerkstoff, insbesondere ein Keramikschaum, da dieser auch hohe Abgastemperaturen zulässt.

Weiter vorzugsweise weist dieser Werkstoff als Bestandteile wenigstens einen Füllstoff, und wenigstens ein Treibmittel auf. Als Füllstoffe sind vorzugsweise organische oder anorganische Stoffe zu verstehen. Bevorzugt weist dieser Füllstoff Keramikpartikel mit im Wesentlichen gleicher oder unterschiedlicher Körnung auf, weiter vorzugsweise weist dieser Füllstoff Quarzsand oder Schwemmzement als Bestandteile auf.

Als Treibmittel sind vorzugsweise Stoffe zu verstehen, welche bevorzugt Sauerstoffverbindungen aufweisen. Vorzugsweise weist das Treibmittel als einen Bestandteil Aluminiumoxid, Siliziumoxid oder dergleichen auf. Weiter vorzugsweise weist das Treibmittel als einen Bestandteil Phyllosilikate, bevorzugt Arten von Glimmer oder dergleichen auf. Vorzugsweise weist der Werkstoff Proteinschäume zur Bildung eines porösen Werkstoffs auf, wie diese insbesondere von Schaum- oder Gasbeton bekannt sind.

Weiter vorzugsweise weist dieser Werkstoff, insbesondere zur Verbesserung der Temperaturbeständigkeit, als einen Bestandteil Silikoncarbide oder Verbindungen mit solchen auf, wie diese insbesondere von herkömmlichen KFZ-Katalysatoren bekannt sind.

Bevorzugt kann der Werkstoff thermisch und/oder chemisch ausgehärtet werden. Dies erleichtert das Einformen der Zu- und -abführkanäle, welches eine bevorzugte Fixierung der Abgaszu- und -abführkanäle in dem Werkstoff darstellt.

Hierzu können in einer bevorzugten Ausführung die einzelnen axialen Kanalteile zunächst axial aneinandergefügt werden. Sind diese hülsenförmig, können sie auf entfernbare Führungselemente aufgefädelt werden. Anschließend kann der Werkstoff zwischen den Kanälen und dem Gehäuse eingefüllt und, beispielsweise durch Erhitzen ausgehärtet.

In einer bevorzugten Ausführungsform wird die Temperatur, welche zum Aushärten des Werkstoffs notwendig ist, mittels wenigstens einer Heizeinrichtung erzeugt. Dabei weist eine Heizeinrichtung wenigstens einen elektrischen Leiter auf, weiter vorzugsweise weist eine Heizeinrichtung mehrere elektrische Leiter insbesondere solche mit einem hohen Ohmschen Widerstand auf. Diese elektrischen Leiter können in einer bevorzugten Ausführungsform als einzelne Fasern oder als Gewirk beziehungsweise Gewebe aus mehreren Fasern in den Werkstoff, insbesondere in einen Keramikschaum, eingebracht sein. Durch Anlegen einer elektrischen Spannung fließt durch diese elektrischen Leiter Strom, welcher zur Erwärmung der Leiter führt und dadurch die Aushärtung des Werkstoffs wenigstens begünstigt bzw. beschleunigt.

Nach dieser Aushärtung können ggf. verwendete Führungselemente, wie insbesondere Führungsstangen für ringförmige Kanalteile oder dergleichen, entfernt werden.

In einer bevorzugten Ausführung expandiert der Werkstoff während des Aushärtens, wie dies beispielsweise bei Keramikmatten der Fall ist. Durch diese Expansion verspannt sich der Werkstoff noch besser zwischen den Abgaszu- und -abführkanälen und der Gehäuseinnenwand und fixiert so die Kanäle besonders sicher. Sind beispielsweise die Abgaskanäle durch axial aneinandergefügte Scheiben gebildet, können die Scheibenaußenumfänge mit Keramikmatten umwickelt und so in das Gehäuse eingeführt werden, wobei die Keramikmatten sich bei erstmaliger Erwärmung ausdehnen, sich dadurch radial zwischen Gehäuseinnenwand und Scheibenaußenumfang verspannen und so aushärten insbesondere in diesem expandierten Zustand verbleiben und die Scheiben im Gehäuse fixieren.

Ein oder mehrere, vorzugsweise alle Abgaszu- und/oder -abführkanäle können über ihre gesamte axiale Länge oder auch nur teilweise parallel zu einer Gehäusemittelachse angeordnet sein. Gleichermaßen können sie über ihre gesamte axiale Länge oder nur einen Teil dieser spiralförmig um eine Schraubenachse verlaufen. Dabei können zwei Kanäle um unterschiedliche, insbesondere parallel angeordnet Schraubachsen spiralförmig verlaufen wie parallel geschaltete Schraubfedern. Gleichermaßen können zwei und insbesondere alle Abgaskanäle spiralförmig um dieselbe Schraubenachse verlaufen, die vorzugsweise parallel zu einer Gehäusemittelachse angeordnet ist, wie dies beispielsweise bei konzentrischen Schraubfedern oder mehrfach verseilten Seilen der Fall ist.

Allgemein können also ein oder mehrere, insbesondere alle Abgaszu- und/oder -abführkanäle eine spiralförmige Windung aufweisen. Dies prägt den sie durchströmenden Abgas in vorteilhafter Weise einen Drall um die Schraubachse(n) auf und fördert so die Reinigungswirkung. Solche spiralförmig verlaufenden Abgaskanäle können in besonders einfacher Weise durch ringförmige Hülsenteile dargestellt werden, die hierzu in einer bevorzugten Ausführung auf entsprechend spiralförmige Führungsmittel, insbesondere Stäbe oder Drähte, aufgefädelt und solcher Art in einem porösen Werkstoff angeordnet, insbesondere eingeformt werden. Nach dem Aushärten des Werkstoffes können die Führungsmittel entfernt insbesondere herausgeschraubt werden.

In einer besonders bevorzugten Ausführung ist wenigstens ein Katalysator vorgesehen, der zusätzlich zu der Filterung von Partikeln wie beispielsweise Rußpartikeln das Abgas reinigt. Ein solcher Katalysator kann in einer bevorzugten Ausführung als separates Bauteil beispielsweise in einem Eintrittsstutzen des Gehäuses vor den Abgaszuführkanälen angeordnet sein. Zusätzlich oder alternativ kann ein Katalysator auch zwischen den offenen Stirnseiten der Abgasabführkanäle und einer Austrittstirnseite des Gehäuses angeordnet sein.

Zusätzlich oder alternativ können auch in den Abgaszu- und/oder -abführkanälen Katalysatoren angeordnet sein. Diese können beispielsweise als spiralförmige Drähte, vorzugsweise aus Palladium oder Platin, ausgebildet oder katalytisch beschichtet sein. Solche Drähte können in vorteilhafter Weise zusätzlich als Heizeinrichtung genutzt werden, auf die nachfolgend eingegangen wird.

Weiter zusätzlich oder alternativ können auch die Abgaszu- und/oder -abführkanäle, insbesondere ein oder mehr, vorzugsweise alle axialen Teile katalytisch beschichtet sein.

Weiterhin kann auch ein poröser Werkstoff, in dem Abgaszu- und/oder -abführkanäle angeordnet sind, katalytisch wirken.

In einer bevorzugten Ausführung ist wenigstens eine Heizvorrichtung vorgesehen, um beispielsweise Rußablagerungen oder dergleichen, vorzugsweise zyklisch abzubrennen.

In einer bevorzugten Ausführung sind elektrische Leiter einer Heizeinrichtung, in einem definierten räumlichen Abschnitt innerhalb des Gehäuses angeordnet. Vorzugsweise sind die elektrischen Leiter in Bereichen angeordnet, welche die Abgaszu- und -abführkanäle insbesondere rohrartig umgeben. Weiter vorzugsweise sind die elektrischen Leiter in Bereichen angeordnet, welche durch zwei, in axialer Richtung voneinander beabstandete Radialebenen begrenzt ist und bevorzugt von den Abgaszu- und Abführkanälen durchdrungen werden. Durch die Anordnung der elektrischen Leiter, welche den Abbrand der Rußablagerungen begünstigen im Bereich der Abgaszu- und Abführkanäle wird eine besonders effektiver Abbrand dieser Ablagerungen erreicht.

In einer bevorzugten Ausführungsform wird dem Abgas vor oder während des Eintritts in die Abgaszuführkanäle eine Substanz zum Verbessern des Rußabbrandes beigemengt. Vorzugsweise wird dem Abgas vor Eintritt in die Abgaszuführkanäle eine gasförmige Substanz beigemengt, bevorzugt Sauerstoff oder ein sauerstoffhaltiges Gemisch, besonders bevorzugt Luft. Vorzugsweise werden diese Beimengungen bei Fahrzeugen mit hohem Fahrzeuggewicht durchgeführt. Vorzugsweise bei einem zulässigen Fahrzeuggesamtgewicht von mehr als 3,5 Tonnen bevorzugt bei einem Fahrzeuggesamtgewicht von über 7,5 Tonnen. In der Regel ist der Sauerstoffgehalt in dem zu reinigenden Abgas niedrig, da der Sauerstoff bei der Umwandlung der chemisch gebundenen Energie in thermische während des Oxidations- bzw. Verbrennungsprozesses aufgezehrt wurde. Durch Zusetzten einer sauerstoffhaltigen oder sauerstofffreisetztenden Substanz zum Abgas, kann der Abbrand des Rußes in der Abgasreinigungseinrichtung begünstigt werden.

In einer bevorzugten Ausführungsform sind die elektrischen Leiter eines solchen Bereichs über eigene elektrische Anschlüsse mit Energie versorgbar. Weiter vorzugsweise ist wenigstens ein Teil dieser elektrischen Anschlüsse durch eine Wandung des Gehäuses, insbesondere radial nach außen geführt. Vorzugsweise können elektrische Anschlüsse, welche auf dem gleichen elektrischen Potential liegen zu einem gemeinsamen Anschluss zusammengefasst werden. Da einzelne Bereiche innerhalb des Gehäuses gezielt zum Abbrand der Rußablagerungen angesteuert werden können, kann ein besonders effektiver Abbrand dieser Ablagerungen erreicht werden.

Weiter vorzugsweise ist es möglich, alle Bereiche, welche elektrische Leiter beinhalten, gemeinsam mit Strom zu versorgen oder jeden dieser Bereiche einzeln, vorzugsweise nach einem vorgebbaren Muster anzusteuern.

In einer bevorzugten Ausführungsform sind die elektrischen Leiter, welche vorzugsweise zum Abbrennen der Rußablagerungen vorgesehen sind, als elektrisch leitende Fasern in den Werkstoff, welcher die Abgaszu- und Abführkanäle umgibt und insbesondere einen Keramikschaum ist, eingebracht. Vorzugsweise werden diese elektrischen Leiter in den Keramikschaum eingebracht, bevor dieser ausgehärtet ist. Weiter vorzugsweise sind diese elektrischen Leiter als einzelne Fasern beziehungsweise regellos, innerhalb des zuvor beschriebenen abgegrenzten Bereiches angeordnet, bevorzugt sind die elektrischen Leiter als ein Gewirk beziehungsweise Gewebe in den Keramikschaum angeordnet. Durch diese Anordnungen der elektrischen Leiter der Heizeinrichtung kann insbesondere ein besonders effektiver Abbrand der Rußablagerungen erreicht werden.

Weiter vorzugsweise oder zusätzlich können Drähte in den Abgaskanälen, die vorteilhafterweise auch als Katalysator fungieren können, wahlweise, insbesondere zyklisch gesteuert, mit Strom beaufschlagt und so erwärmt werden.

Zusätzlich oder alternativ können auch eine oder mehrere Glühkerzen vorgesehen sein. Diese sind in einer bevorzugten Ausführung an einem Eintrittsstutzen des Gehäuses angeordnet, um diesen durch Strömen des Abgas zusätzlich aufzuheizen. Insbesondere bei Betriebsstart, d. h. noch verhältnismäßig kaltem Abgas können solche Glühkerzen mit Strom beaufschlagt werden, um das Abgas zu erwärmen und so die katalytische Wirkung von Katalysatoren der Abgasreinigungseinrichtung zu erhöhen. Zusätzlich oder alternativ können solche Heizeinrichtungen während des Betriebs, insbesondere zyklisch, mit Energie versorgt werden, um die Temperatur des Abgases noch weiter zu erhöhen und so Reststoffe, insbesondere Rußpartikel, teilweise oder vollständig abzubrennen.

Durch die vorliegende Erfindung, insbesondere die axial mehrfach geteilten Abgaszu- und/oder -abführkanäle welche, vorzugsweise im Gehäuse durch einen porösen Füllstoff fixiert sind, in den sie bei Urformen des Füllstoffes eingeformt worden sind, wird eine vorteilhafte Abgasreinigungseinrichtung insbesondere für Kraftfahrzeuge mit Dieselmotor zur Verfügung gestellt, die einfach herstellbar ist und im Betrieb auftretende Temperaturen und Vibrationen erträgt.

Eine erfindungsgemäße Abgasreinigungseinrichtung ist insbesondere zum Entfernen von Rußablagerungen mittels eines Verfahrens betreibbar, welches die Schritte aufweist:
- detektieren der Notwendigkeit des Rußabbrandes
- Erhöhen der Temperatur innerhalb des Gehäuses,
- Beenden des Rußabbrandes.

Dabei kann die Notwendigkeit des Rußabbrandes vorzugsweise durch festlegen bestimmter Zeitintervall beziehungsweise Fahrstrecken detektiert werden, bevorzugt durch Messen von Strömungsgeschwindigkeiten innerhalb des Abgasstroms vor beziehungsweise nach der Abgasreinigungseinrichtung und besonders bevorzugt durch Messen eines Druckabfalls innerhalb des Abgasstroms beim Durchströmen der Abgasreinigungseinrichtung beziehungsweise eines Staudrucks vor der Abgasreinigungseinrichtung. Nach dem Feststellen der Notwendigkeit des Rußabbrandes wird insbesondere durch die beschriebenen Heizeinrichtungen die Temperatur innerhalb der Abgasreinigungseinrichtung so erhöht, dass die Rußablagerung abbrennen.

Der Rußabbrand endet vorzugsweise nach dem die Rußablagerungen weitgehend abgebrannt sind oder bevorzugt durch das Stoppen der Energiezufuhr an die Heizeinrichtungen.

In einer bevorzugten Betriebsart des Verfahrens zum Steuern der Abgasreinigungseinrichtung werden die Heizeinrichtungen nach einem vorgegebenen Muster mit Energie versorgt. Ein solches Muster zum Ansteuern der Heizeinrichtungen kann vorzugsweise vorsehen, dass die Heizeinrichtungen seriell, beginnend bei der Heizeinrichtung welche der Eintrittsstrinseite am nächsten liegt und endend bei der Heizeinrichtung, welche der Austrittsstrinseite am nächsten liegt, nacheinander mit Energie versorgt werden. Die Heizeinrichtungen können vorzugsweise in der gleichen Reihenfolge auch wieder abgeschalten werden, es ist bevorzugt auch möglich alle Heizeinrichtungen gleichzeitig abzustellen.

In einer bevorzugten Betriebsart wird nur eine begrenzte Anzahl von Heizeinrichtungen gleichzeitig betrieben, vorzugsweise weniger als vier, bevorzugt weniger als drei und besonders bevorzugt eine. Durch eine gezielte Ansteuerung der Heizeinrichtungen nach einem vorgebbaren Muster können die Rußablagerungen besonderes effektiv abgebrannt werden.

Eine Erfindungsgemäße Abgasreinigungseinrichtung ist mittels eines Verfahrens herstellbar, welches die Schritte aufweist:
- Erstellen der Abgaszu- und Abführkanäle,
- Keramikschaum in das Gehäuse und zwischen die Abgaszu- und Abfürhkanäle einbringen und
- Aushärten des Keramikschaums.

Bei einem bevorzugten Herstellverfahren werden die Abgaszu- und Abführkanäle durch aneinander reihen von Keramikhülsen oder anderen Bauteilen, welche im Anschluss die Abgaszu- und Abführkanäle bilden, erstellt.

Der Keramikschaum wird vorzugsweise in flüssigem Zustand in das Gehäuse eingefüllt. Vorzugsweise werden die Bauteile, welche die Abgaszu- und Abführkanäle bilden vor dem Einfüllen des Keramikschaums in das Gehäuse eingebracht alternativ werden diese Bauteile in das Gehäuse eingebracht, wenn dieses bereits mit einer vorbestimmten Menge Keramikschaum befüllt ist. Zum Aushärten des Keramikschaums werden vorzugsweise die Heizeinrichtungen herangezogen. Für das Aushärten des Keramikschaums sind die Heizeinrichtungen insbesondere nach den auch zum Rußabbrand beschriebenen Mustern betreibbar.

Weitere Vorteile und Merkmale der vorliegenden Erfindung ergeben sich aus den Unteransprüchen und den nachfolgenden Ausführungsbeispielen. Hierzu zeigen, teilweise schematisiert:
- Fig. 1:: eine Abgasreinigungseinrichtung mit Heizeinrichtung und Katalysator, und von Keramikschaum umgebene Abgaszu- und Abgasabführungskanälen,

- Fig. 2:: eine Abgasreinigungseinrichtung mit durch Scheiben und Keramikmatten gehaltenen Abgaszu- und Abgasabführungskanälen,
- Fig. 3:: eine Abgasreinigungseinrichtung mit Katalysator und Heizeinrichtung innerhalb der Abgaszuführungskanälel
- Fig.4:: eine Abgasreinigungseinrichtung mit Scheiben, welche durch Keramikmatten gehalten werden,
- Fig.5:: eine Abgasreinigungseinrichtung mit mehreren von einander unabhängigen Heizeinrichtungen,
- Fig.6:: eine Abgasreinigungseinrichtung mit mehreren von einander unabhängigen Heizeinrichtungen im Querschnitt.

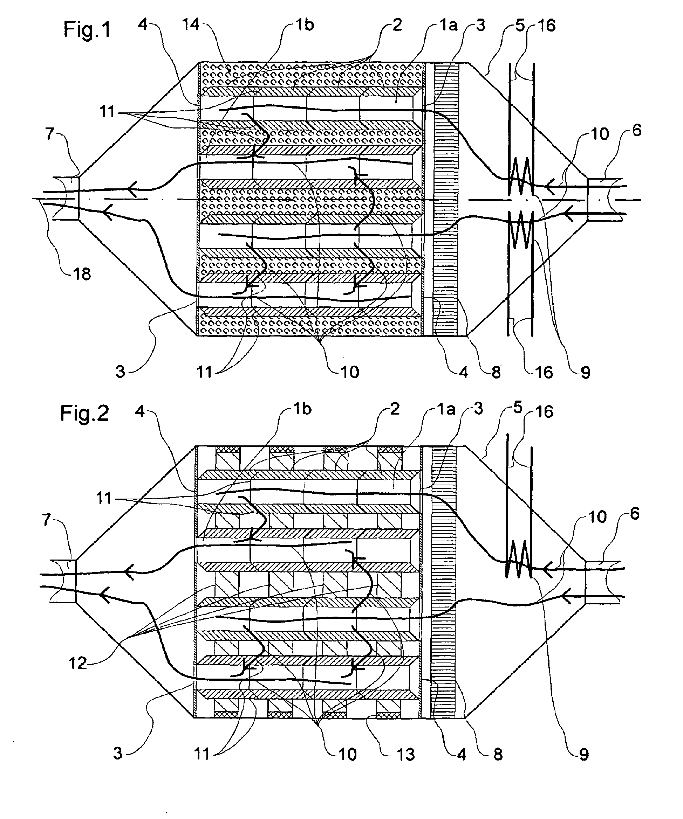

In Figur 1 ist eine Abgasreinigungseinrichtung dargestellt, bei welcher eine Reihe von Abgaszuführungskanälen 1a und Abgasabführungskanälen 1b durch eine Vielzahl von keramischen Hülsen 2 gebildet wird. Dabei weisen die Abgaszuführungskanäle 1a eine offene Stirnseite 3 und eine geschlossene Stirnseite 4 auf. Die Öffnungen der Abgaskanäle (1a, 1 b) werden in Vorteilhafterweise durch Bleche, insbesondere durch Stahlbleche mit Bohrungen offen gehalten oder verschlossen. Ebenso ist es möglich die Abgaskanäle (1a, 1b) durch Verschlussstopfen, z.B. aus Keramik, zu verschließen beziehungsweise nicht zu verschließen.

Das Abgas 10 tritt durch die Eintrittsstirnseite 6 in das Gehäuse 5 ein und wird, bei nicht ausreichender Abgastemperatur durch die Heizeinrichtungen 9, vorzugsweise sind diese Heizeinrichtungen Glühkerzen, auf eine höhere Temperatur aufgeheizt, dies erleichtert die Reaktion zur Abgasreinigung im nachfolgenden Katalysator 8 und begünstigt den Abbrand von in der Abgasreinigungseinrichtung abgelagerten Feststoffpartikeln. Die notwendige Energie wird den Heizeinrichtungen 9 mittels der elektrischen Anschlüsse 16 zugeführt. Vorzugsweise weist das Gehäuse 5 eine im Wesentliche zur Mittelachse 18 rotationssymmetrische Form auf. Hat das Abgas 10 den Katalysator 8 passiert, kann es durch die offenen Stirnseiten 3 in die Abgaszuführungskanäle 1 a eintreten. Aus diesen Abgaszuführungskanälen 1 a tritt das Abgas insbesondere durch die gasdurchlässigen Spalte 11 in den Bereich aus, welcher die Abgaszuführungskanäle 1a innerhalb des Gehäuses 5 umgibt und mit dem keramischen Schaum 14 befüllt ist.

Die Abgaszuführungs- 1 a und Abgasabführungskanäle 1b werden durch diesen keramischen Schaum 14 gehalten, und gegen Vibrationen geschützt. Der keramische Schaum 14 ist insbesondere ein offenporiger Schaum, darunter ist zu verstehen, dass der Schaum von einem Medium durchströmt werden kann.

Dabei weist der keramische Schaum 14 den Vorteil auf, dass die Hülsen 2 der Abgaskanäle (1a, 1b) besonders fest und hitzebeständig gehalten werden. Ist das Abgas 10 durch diesen Schaum 14 getreten, dann es wiederum durch gasdurchlässige Spalte 11 in die Abgasabführungskanäle 1 b eintreten. Durch die zahlreichen Durchtritte durch Spalte und Ritzen werden somit Rußpartikel aus dem Abgas 10 entfernt.

Aus den Abgasabführungskanälen 1 b kann das gereinigte Abgas durch die offenen Stirnseiten 4 in Richtung der Austrittsstirnseite 7 des Gehäuses 5 austreten.

In Figur 2 ist eine Abgasreinigungseinrichtung mit Abgaszu- 1a und Abgasabführungskanälen 1b dargestellt. Dabei werden diese durch mehrere Hülsen 2 gebildet, zwischen diesen Hülsen 2 bilden sich insbesondere gasdurchlässige Spalte 11 aus. Die Abgaskanäle (1a, 1 b) sind in dem Gehäuse 5 aufgenommen, in welches das Abgas 10 durch die Eintrittsstirnseite 6 ein- und durch die Austrittsstirnseite 7 wieder austritt.

Die Hülsen 2 werden in Scheiben 12 gehalten, vorzugsweise weisen die Scheiben 12 als einen Bestandteil Edelmetall beziehungsweise Keramik auf. Die Scheiben 12 werden wenigstens teilweise an ihren äußeren Mantelflächen mit Keramikmatten 13 umgeben, wobei sich diese Keramikmatten 13 vorteilhafterweise unter dem erstmaligen Einfluss von Wärme ausdehnen und im Wesentlichen nicht wieder zusammenziehen. Somit wird ein fester und weitgehend vibrationsunempfindlicher Halt der Scheiben 12 und damit der Abgaskanäle (1a, 1b) im Gehäuse 5 ermöglicht. Wie bei dem in Figur 1 dargestellten Ausführungsbeispiel bilden sich zwischen benachbarten Stirnseiten der Hülsen 2 gasdurchlässige Spalte 11 aus. Das Abgas 10 kann durch diese Spalte 11 aus den Abgaszuführungskanälen 1 a ausströmen, hierbei werden Feststoffpartikel, insbesondere Rußpartikel aus dem Abgas 10 abgeschieden. Das Abgas 10 tritt in die Abgasabführungskanäle 1b ebenso durch die gasdurchlässigen Spalte 11 ein, wie es aus den Abgaszuführungskanälen 1 a durch diese ausgetreten ist.

Die Abgasreinigungseinrichtung weist die Heizeinrichtung 9 auf, welche über die elektrischen Anschlüsse 16 mit Energie versorgt wird. Durch das Vorwärmen des Abgases 10 mittels der Heizeinrichtung 9, kann die Funktion des Katalysators 8 verbessert werden, so wie der Abbrand der sich in der Abgasreinigungseinrichtung absetzenden Feststoffpartikel begünstigt werden. Beim Durchtritt durch den Katalysator 8 werden dem Abgas 10 Schadstoffe entzogen beziehungsweise in unschädlichere Bestandteile umgewandelt.

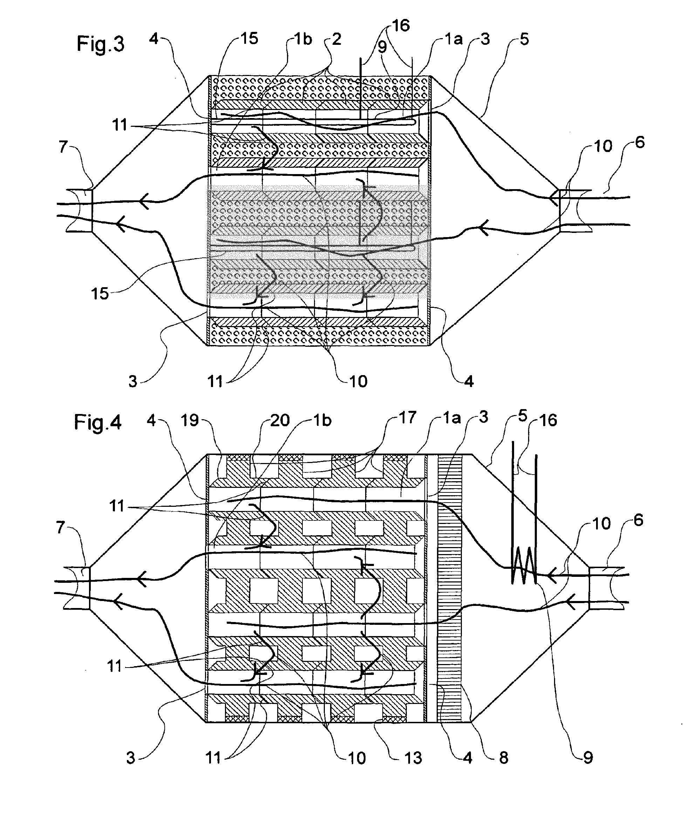

In Figur 3 ist ein Ausführungsbeispiel einer Abgasreinigungseinrichtung dargestellt, welches im Wesentlichen dem Ausführungsbeispiel von Figur 1 entspricht.

Im Unterschied zu dem in Figur 1 dargestellten Ausführungsbeispiel weist das in Figur 3 dargestellte Ausführungsbeispiel in den Abgaszuführungskanälen 1 a eine Katalysatoreinrichtung 15 auf, diese ist als ein katalytischer Draht ausgeführt, wobei dieser Draht 15 beliebige Querschnittsform aufweisen kann. Dabei erfüllt der katalytische Draht 15 im Wesentlichen die gleiche Aufgabe, wie der Katalysator 8 in Figur 1 und Figur 2. Der katalytische Draht 15 ist wenigstens in einem Bereich mit elektrischen Anschlüssen 16 versehen, somit ergibt sich ein Bereich in welchem dieser als Heizeinrichtung 9 aufgefasst werden kann. Durch die Heizeinrichtung 9 kann insbesondere der Abbrand der Feststoffpartikel, welche sich in der Abgasreinigungseinrichtung abgesetzt haben begünstigt werden.

In Figur 4 ist ein Ausführungsbeispiel einer Abgasreinigungseinrichtung dargestellt, welches im Wesentlichen dem Ausführungsbeispiel von Figur 2 entspricht.

Im Unterschied zu dem in Figur 2 dargestellten Ausführungsbeispiel sind die Hülsen 2 (nicht dargestellt) integral mit den Scheiben 12 (nicht dargestellt) ausgebildet und werden in diesem Ausführungsbeispiel als Reinigungsscheiben 17 bezeichnet. Dabei weisen die Reinigungsscheiben 17 Scheibenvorsprünge 19 und Scheibenaussparungen 20 auf, wobei von zwei benachbarten Reinigungsscheiben 17 die Reinigungsvorsprünge 19 jeweils in Scheibenaussparungen 20 eingreifen. Durch mehrere dieser Reinigungsscheiben 17 werden somit Abgaszuführungskanäle 1a und Abgasabführungskanäle 1b gebildete. Beim Übertritt von den Abgaszuführungskanälen 1 a in die Abgasabführungskanäle 1b durchströmt das Abgas 10 jeweils die gasdurchlässigen Spalte 11 zwischen zwei benachbarten Reinigungsscheiben 17 und scheidet dabei Feststoffpartikel ab.

Der Katalysator 8 und die Heizeinrichtung 9 erfüllen die zuvor beschriebenen Aufgaben (Figuren 1, 2). Die Reinigungsschreiben 17 sind an ihrer äußeren Mantelfläche wenigstens teilweise mit Keramikmatten 13 umgeben, sowie bei der in Figur 2 beschrieben Ausführungsform. Durch diese Keramikmatten 13, werden die Reinigungsscheiben 17 sicher und hitzebeständig im Gehäuse 5 gehalten.

Das durch die Eintrittsstirnseite 6 in das Gehäuse 5 eingeströmte Abgas 10 kann gereinigt aus diesem wieder durch die Austrittsstirnseite 7 austreten.

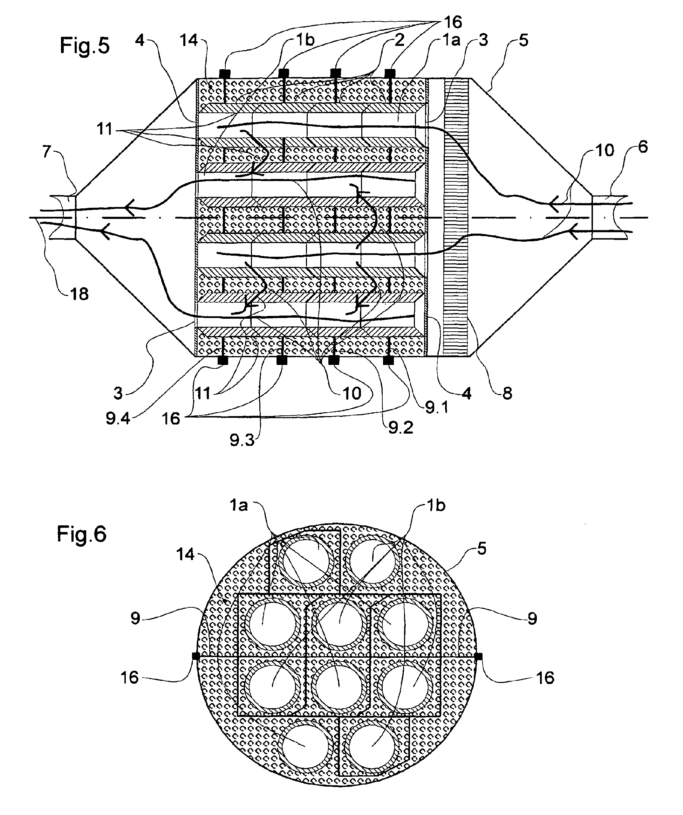

In Figur 5 ist ein Ausführungsbeispiel einer Abgasreinigunseinrichtung gezeigt, welches mehrere unabhängige Heizeinrichtungen 9.1 bis 9.4 aufweist, ansonsten entspricht dieses Ausführungsbeispiel dem in Figur 1 beschriebenen Ausführungsbeispiel. Die Heizeinrichtungen 9.1 bis 9.4 sind mittels elektrischer Kontakte 16 mit Energie versorgbar. Werden die Heizeinrichtungen 9.1 bis 9.4 mit elektrischer Energie versorgt, so tragen diese zur Erhöhung der Temperatur innerhalb des Gehäuses 5 bei. Durch eine solche Temperaturerhöhung kann einerseits der Keramikschaum 14 ausgehärtet werden beziehungsweise der Abbrand von Rußablagerungen eingeleitet werden. Dabei sind die elektrischen Anschlüsse 16 der Heizeinrichtungen 9.1 bis 9.4 durch das Gehäuse 5 radial nach außen geführt.

Figur 6 zeigt einen Querschnitt durch eine Abgasreinigungseinrichtung auf Höhe einer Heizeinrichtung 9.1 bis 9.4. Die Heizeinrichtung 9 umgibt dabei mehrere Abgaszu- und Abführkanäle 1 a, 1 b. Die elektrischen Anschlüsse 16 der Heizeinrichtung 9 sind durch das Gehäuse 5 nach außen geführt. Die Abgaszu- und Abführkanäle 1a und 1b durchdringen die Heizeinrichtung 9. Die Heizeinrichtung 9 ist innerhalb des Gehäuses 5 in den Keramikschaum 14 eingebettet.

### Bezugszeichenliste:

| | |
|---|---|
| 1a | Abgaszuführungskanal |
| 1b | Abgasabführungskanal |
| 2 | Hülse |
| 3 | Offene Stirnseite |
| 4 | Geschlossene Stirnseite |
| 5 | Gehäuse |
| 6 | Eintrittsstirnseite |
| 7 | Austrittsstirnseite |
| 8 | Katalysator |
| 9 | Heizeinrichtung |
| 10 | Abgasstrom |
| 11 | Gasdurchlässiger Spalt |
| 12 | Scheibe |
| 13 | Keramikmatte |
| 14 | Keramikschaum |
| 15 | Katalytischer Draht |
| 16 | Elektrischer Anschluss |
| 17 | Reinigungsscheiben |

## Patentansprüche

1. Abgasreinigungseinrichtung mit einem Gehäuse (5) mit einer, insbesondere divergenten, Eintrittsstirnseite (6) und einer, insbesondere konvergenten, Austrittsstirnseite (7), in dem Gehäuse (5) angeordneten Abgaszuführkanälen (1a), die eine der Eintrittsstirnseite (6) des Gehäuses (5) zugewandte offene Stirnseite (3) und eine gegenüberliegende, der Austrittsstirnseite (7) des Gehäuses zugewandte geschlossene Stirnseite (4) aufweisen, und Abgasabführkanälen (1 b), die eine der Austrittsstirnseite (7) des Gehäuses (5) zugewandte offene Stirnseite (3) und eine gegenüberliegende, der Eintrittsstirnseite (6) des Gehäuses (5) zugewandte geschlossene Stirnseite (4) aufweisen,
**dadurch gekennzeichnet, dass**
Abgaszu- und/oder -abführkanäle (1 a, 1 b) axial mehrteilig ausgebildet sind und
dass einander zugewandte Stirnseiten aufeinanderfolgender Abgaszuund/oder -abführkanalteile (1 a, 1 b) aneinander angepasst, insbesondere komplementär ausgebildet sind, um formschlüssig so ineinanderzugreifen, dass zwischen ihnen ein gasdurchlässiger Spalt (11) entsteht.

2. Abgasreinigungseinrichtung nach Anspruch 1, **dadurch gekennzeichnet, dass**
axial mehrteilige Abgaszu- und/oder -abführkanäle (1a, 1 b) wenigstens teilweise in einem, vorzugsweise expandierend aushärtenden, porösen Werkstoff (14), insbesondere Keramikschaum, angeordnet, insbesondere eingeformt, sind.

3. Abgasreinigungseinrichtung nach einem der vorhergehenden Ansprüche,
**dadurch gekennzeichnet, dass**
ein axial mehrteiliger Abgaszu- oder -abführkanal (1 a, 1 b) wenigstens zwei, insbesondere ringförmige, aufeinanderfolgende Hülsen (2), insbesondere Keramikhülsen, aufweist, wobei zwischen einander zugewandten Stirnseiten der beiden benachbarten Hülsen der gasdurchlässige Spalt (11) vorgesehen ist.

4. Abgasreinigungseinrichtung nach einem der vorhergehenden Ansprüche,
**gekennzeichnet**
**durch** wenigstens zwei aufeinanderfolgende Scheiben (12), insbesondere Keramikscheiben, die miteinander kommunizierende Durchgangsöffnungen aufweisen, welche axial mehrteilige Abgaszu- und/oder -abführkanäle (1a, 1 b) definieren, wobei zwischen einander zugewandten Stirnseiten der beiden benachbarten Scheiben (12) der gasdurchlässige Spalt (11) vorgesehen ist.

5. Abgasreinigungseinrichtung nach einem der vorhergehenden Ansprüche,
**dadurch gekennzeichnet, dass**
der gasdurchlässige Spalt (11) zwischen zwei aufeinanderfolgenden Abgaszu- und/oder -abführkanalteilen (1 a, 1 b) derart ausgebildet ist, dass Partikel im Abgasstrom durch den Kanal, die größer sind als 200 nm, vorzugsweise größer als 100 nm und insbesondere größer als 30 nm, wenigstens im Wesentlichen nicht mehr durch den Spalt (11) treten.

6. Abgasreinigungseinrichtung nach einem der vorhergehenden Ansprüche,
**dadurch gekennzeichnet, dass**
Abgaszu- und/oder-abführkanäle (1a, 1b) wenigstens teilweise parallel zu einer Gehäusemittelachse (18) angeordnet sind und/oder wenigstens teilweise spiralförmig um eine Schraubenachse verlaufen.

7. Abgasreinigungseinrichtung nach einem der vorhergehenden Ansprüche,
**dadurch gekennzeichnet, dass**
Abgaszu- und -abführkanäle (1 a, 1 b) insbesondere in radialer und/oder Umfangsrichtung, wechselweise angeordnet sind.

8. Abgasreinigungseinrichtung nach einem der vorhergehenden Ansprüche,
**dadurch gekennzeichnet, dass**
im Zwischenraum zwischen den Abgaszu- und -abführkanälen (1 a, 1 b) und innerhalb des Gehäuses (5) wenigstens zwei, vorzugsweise mehrere Heizeinrichtungen (9.1 bis 9.4) angeordnet sind.

9. Abgasreinigungseinrichtung nach dem vorhergehenden Anspruch,
**dadurch gekennzeichnet, dass**
wenigstens zwei, vorzugsweise alle dieser Heizeinrichtungen (91 bis 9.4) elektrische Anschlüsse zur Energieversorgung aufweisen.

10. Abgasreinigungseinrichtung nach dem vorhergehenden Anspruch,
**dadurch gekennzeichnte, dass**
wenigstens ein Teil der elektrischen Anschlüsse (16) der Heizeinrichtungen (9.1 bis 9.4) durch die Wandung des Gehäuses (5) radial nach Außen geführt sind.

11. Abgasreinigungseinrichtung nach einem der vorhergehenden Ansprüche,
**dadurch gekennzeichnet, dass**
dass eine Heizeinrichtungen (9.1 bis 9.4) innerhalb des Gehäuses (5) in einem durch zwei Radialebene begrenztem räumlichen Abschnitt angeordnet ist.

12. Abgasreinigungseinrichtung nach einem der vorhergehenden Ansprüche 8 bis 11,
**dadurch gekennzeichnet, dass**
die Heizeinrichtungen (9) als elektrisch leitende Fasern in den Keramikschaum (14) eingebracht sind.

13. Abgasreinigungseinrichtung nach einem der vorhergehenden Ansprüche,
**dadurch gekennzeichnet, dass**
ein Katalysator (8) zwischen einer Eintrittsstirnseite (6) des Gehäuses (5) und den Abgaszu- und -abführkanälen (1a, 1b), zwischen den Abgaszu-
und -abführkanälen (1a, 1 b) und einer Austrittsstirnseite (7) des Gehäuses (5) und/oder in Abgaszu- und/oder -abführkanälen (1a, 1b) angeordnet ist, und/oder Abgaszu- und/oder -abführkanäle (1a, 1b) katalytisch beschichtet sind, und/oder ein poröser Werkstoff, in dem Abgaszu- und/oder -abführkanäle (1a, 1b) wenigstens teilweise angeordnet sind, einen katalytischen Werkstoff aufweist.

14. Verfahren zum Betrieb einer Abgasreinigungseinrichtung nach einem der Ansprüche 1 bis 13, **dadurch gekennzeichnet, dass** dieses Verfahren die Schritte aufweist:
- Detektieren der Notwendigkeit des Rußabbrands,
- Erhöhung der Temperatur innerhalb des Gehäuses (5) und
- Beenden dieses Rußabbrands.

15. Verfahren zum Betrieb einer Abgasreinigungseinrichtung nach Anspruch 14, **dadurch gekennzeichnet, dass**
die Heizeinrichtungen (9.1 bis 9.4) zum Abbrennen des Rußes in einer vorgebbaren Reihenfolge aufgeheizt werden.

16. Verfahren zum Betrieb einer Abgasreinigungseinrichtung nach einem der Ansprüche 14 oder 15, **dadurch gekennzeichnet, dass**
dem Abgas vor oder während des Eintritts in die Abgaszuführkanäle eine sauerstoffhaltige oder sauerstofffreigebende Substanz, vorzugsweise Luft oder Sauerstoff, beigemengt wird.

17. Verfahren zum Herstellen einer Abgasreinigungseinrichtung nach einem der Ansprüche 1 bis 13, **dadurch gekennzeichnet, dass** dieses die Schritte aufweist:
- Erstellen der Abgaszu- und -abführkanäle (1a und 1b)
- Keramikschaum (14) in den Zwischenraum zwischen den Abgaszu- und
- abführkanäle und in das Gehäuse (5) einbringen,
- Aushärten des Keramikschaums (14).

18. Verfahren zum Herstellen einer Abgasreinigungseinrichtung nach Anspruch 17, **dadurch gekennzeichnet, dass**
zum Aushärten des Keramikschaums (14) die Heizeinrichtungen (9) herangezogen und aufgeheizt werden.

## Claims

1. A waste gas cleaning device with a housing (5) with an, in particular divergent, inlet end side (6) and an, in particular convergent, outlet end side (7), waste gas feed channels (1 a) arranged in the housing (5) which comprise an open end side (3) facing the inlet end side (6) of the housing (5) and an opposing closed end side (4) facing the outlet end side (7) of the housing, and waste gas outlet channels (1 b) which comprise an open end side (3) facing the outlet end side (7) of the housing (5) and an opposing closed end side (4) facing the inlet end side (6) of the housing (5),
**characterized in that**
waste gas inlet and/or outlet channels (1 a, 1 b) are axially segmented in multiple segments
and
that end sides facing each other of consecutive waste gas inlet and/or outlet channel parts (1 a, 1 b) are adapted to one another and are in particular formed complementarily in order to positively engage with each other in such a way that a gas-permeable gap (11) is formed between them.

2. A waste gas cleaning device according to claim 1, **characterized in that** axially segmented waste gas inlet and/or outlet channels (1 a, 1 b) are at least partially arranged, in particular molded, in a, preferably expandingly hardening, porous material (14), in particular ceramic foam.

3. A waste gas cleaning device according to any of the preceding claims,
**characterized in that**
an axially segmented waste gas inlet or outlet channel (1 a, 1 b) comprises at least two, in particular annular, consecutive sleeves (2), in particular ceramic sleeves, wherein between facing end sides of the two adjacent sleeves the gas-permeable gap (11) is provided.

4. A waste gas cleaning device according to any of the preceding claims,
**characterized**
**by** at least two consecutive disks (12), in particular ceramic disks, which comprise through openings communicating with each other which define axially segmented waste gas inlet and/or outlet channels (1 a, 1 b), wherein between facing end sides of the two adjacent disks (12) the gas-permeable gap (11) is provided.

5. A waste gas cleaning device according to any of the preceding claims,
**characterized in that**
the gas-permeable gap (11) between two consecutive waste gas inlet and/or outlet channel parts (1 a, 1 b) is formed such that particles in the waste gas stream through the channel that are larger than 200 nm, preferably larger than 100 nm, and in particular larger than 30 nm at least substantially no longer pass through the gap (11).

6. A waste gas cleaning device according to any of the preceding claims,
**characterized in that**
waste gas inlet and/or outlet channels (1 a, 1 b) are at least partially arranged in parallel to a central axis (18) of the housing and/or at least partially spiral around a screw axis.

7. A waste gas cleaning device according to any of the preceding claims,
**characterized in that**
waste gas inlet and outlet channels (1 a, 1 b) are, in particular in the radial and/or circumferential direction, arranged alternatingly.

8. A waste gas cleaning device according to any of the preceding claims,
**characterized in that**
in the space between the waste gas inlet and outlet channels (1 a, 1 b) and within the housing (5) at least two, preferably several heating devices (9.1 to 9.4) are arranged.

9. A waste gas cleaning device according to the preceding claim,
**characterized in that**
at least two, preferably all of those, heating devices (9.1 to 9.4) comprise electrical connections for power supply.

10. A waste gas cleaning device according to the preceding claim,
**characterized in that**
at least a part of the electrical connections (16) of the heating devices (9.1 to 9.4) for power supply are guided radially outwards through the wall of the housing (5).

11. A waste gas cleaning device according to any of the preceding claims,
**characterized in that**
a heating device (9.1 to 9.4) within the housing (5) is arranged in a spatial section limited by two radial planes.

12. A waste gas cleaning device according to any of the preceding claims 8 to 11,
**characterized in that**
the heating devices (9) are introduced into the ceramic foam (14) as electrically conductive fibers.

13. A waste gas cleaning device according to any of the preceding claims,
**characterized in that**
a catalyzer (8) is arranged between an inlet end side (6) of the housing (5) and the waste gas inlet and outlet channels (1 a, 1 b), between the waste gas inlet and outlet channels (1 a, 1 b), and an outlet end side (7) of the housing (5), and/or within waste gas inlet and/or outlet channels (1 a, 1 b), and/or waste gas inlet and/or outlet channels (1 a, 1 b) are catalytically coated, and/or a porous material in which waste gas inlet and/or outlet channels (1 a, 1 b) are at least partially arranged comprises a catalytic material.

14. A method for operating a waste gas cleaning device according to one of claims 1 to 13, **characterized in that**
this method comprises the following steps:
- detecting the necessity for soot burn-off,
- rising the temperature within the housing (5), and
- ending the soot burn-off.

15. A method for operating a waste gas cleaning device according to claim 14,
**characterized in that**
the heating devices (9.1 to 9.4) are heated for soot burn-off in a predeterminable order.

16. A method for operating a waste gas cleaning device according to one of claims 14 or 15, **characterized in that**
an oxygen-containing or oxygen-releasing substance, preferably air or oxygen, is added to the waste gas before or during the entry into the waste gas inlet channels.

17. A method for producing a waste gas cleaning device according to one of claims 1 to 13, **characterized in that**
it comprises the following steps:
- creating waste gas inlet and outlet channels (1 a and 1 b),
- introducing ceramic foam (14) into the space between the waste gas inlet and outlet channels (1 a, 1 b) and into the housing (5),
- hardening of the ceramic foam (14).

18. A method for producing a waste gas cleaning device according to claim 17,
**characterized in that**
for hardening of the ceramic foam (14) the heating devices (9) are used and heated.

## Revendications

1. Dispositif d'épuration des gaz d'échappement pourvu d'un carter (5) présentant une face frontale d'entrée (6), en particulier divergente, et une face frontale de sortie (7), en particulier convergente, de canaux d'amenée de gaz d'échappement (1 a) disposés dans le carter (5), lesquels canaux présentent une face frontale (3) ouverte tournée vers la face frontale d'entrée (6) du carter (5) et une face frontale (4) fermée opposée tournée vers la face frontale de sortie (7) du carter, et de canaux d'évacuation des gaz d'échappement (1b), lesquels présentent une face frontale ouverte (3) tournée vers la face frontale de sortie (7) du carter (5) et une face frontale (4) fermée opposée, tournée vers la face frontale d'entrée (6) du carter (5),
**caractérisé en ce que**
des canaux d'amenée et/ou d'évacuation des gaz d'échappement (1 a, 1b) sont réalisés en plusieurs parties dans le sens axial et **en ce que** les faces frontales tournées les unes vers les autres des parties successives de canal d'amenée et/ou d'évacuation des gaz d'échappement (1a, 1b) sont adaptées les unes aux autres, sont en particulier complémentaires, afin de s'insérer les unes dans les autres par complémentarité de formes, de sorte qu'une fente (11) perméable aux gaz se forme entre ces faces.

2. Dispositif d'épuration des gaz d'échappement selon la revendication 1, **caractérisé en ce que** les canaux d'amenée et/ou d'évacuation des gaz d'échappement (1 a, 1 b) réalisés en plusieurs parties dans le sens axial sont disposés, en particulier évidés, au moins en partie dans un matériau (14) poreux, de préférence durcissant en expansion, en particulier une mousse céramique.

3. Dispositif d'épuration des gaz d'échappement selon l'une quelconque des revendications précédentes, **caractérisé en ce qu'**un canal d'amenée ou d'évacuation des gaz d'échappement (1 a, 1 b) réalisé en plusieurs parties dans le sens axial comprend au moins deux manchons (2) successifs, en particulier annulaires, en particulier des manchons céramiques, une fente (11) perméable aux gaz étant présente entre les faces frontales tournées les unes vers les autres des deux manchons voisins.

4. Dispositif d'épuration des gaz d'échappement selon l'une quelconque des revendications précédentes,
**caractérisé par** au moins deux disques (12) successifs, en particulier des disques céramiques, lesquels comprennent des ouvertures de passage communiquant les unes avec les autres, lesquelles définissent des canaux d'amenée et/ou d'évacuation des gaz d'échappement (1a, 1b) réalisés en plusieurs parties dans le sens axial, une fente (11) perméable aux gaz étant présente entre les faces frontales tournées les unes vers les autres des deux disques (12) voisins.

5. Dispositif d'épuration des gaz d'échappement selon l'une quelconque des revendications précédentes, **caractérisé en ce que** la fente (11) perméable aux gaz est formée entre deux parties d'amenée et/ou d'évacuation des gaz d'échappement (1 a, 1 b) successives, de telle manière que des particules dans le courant des gaz d'échappement traversant le canal, lesquelles sont supérieures à 200 nm, de préférence supérieures à 100 nm et en particulier supérieures à 30 nm, ne traversent au moins sensiblement plus la fente (11).

6. Dispositif d'épuration des gaz d'échappement selon l'une quelconque des revendications précédentes, **caractérisé en ce que** des canaux d'amenée et d'évacuation des gaz d'échappement (1 a, 1 b) sont disposés au moins en partie parallèlement à un axe central (18) du carter et/ou s'étendent au moins en partie en spirale autour d'un axe hélicoïdal.

7. Dispositif d'épuration des gaz d'échappement selon l'une quelconque des revendications précédentes, **caractérisé en ce que** les canaux d'amenée et d'évacuation des gaz d'échappement (1a, 1b) sont disposés en alternance, en particulier dans la direction radiale et/ou périphérique.

8. Dispositif d'épuration des gaz d'échappement selon l'une quelconque des revendications précédentes, **caractérisé en ce qu'**au moins deux, de préférence plusieurs dispositifs de chauffage (9.1 à 9.4), sont disposés dans l'espace intermédiaire entre les canaux d'amenée et d'évacuation des gaz d'échappement (1 a, 1 b) et à l'intérieur du carter (5).

9. Dispositif d'épuration des gaz d'échappement selon l'une quelconque des revendications précédentes, **caractérisé en ce qu'**au moins deux, de préférence tous ces dispositifs de chauffage (9.1 à 9.4) comprennent des raccordements électriques permettant une alimentation en énergie.

10. Dispositif d'épuration des gaz d'échappement selon l'une quelconque des revendications précédentes, **caractérisé en ce qu'**au moins une partie des raccordements électriques (16) des dispositifs de chauffage (9.1 à 9.4) sont guidés radialement vers l'extérieur à travers la paroi du carter (5).

11. Dispositif d'épuration des gaz d'échappement selon l'une quelconque des revendications précédentes, **caractérisé en ce qu'**un des dispositifs de chauffage (9.1 à 9.4) est disposé à l'intérieur du carter (5) dans une partie tridimensionnelle délimitée par deux plans radiaux.

12. Dispositif d'épuration des gaz d'échappement selon l'une quelconque des revendications 8 à 11, **caractérisé en ce que** les dispositifs de chauffage (9) prenant la forme de fibres électroconductrices sont introduits dans la mousse céramique (14).

13. Dispositif d'épuration des gaz d'échappement selon l'une quelconque des revendications précédentes, **caractérisé en ce qu'**un catalyseur (8) est disposé entre une face frontale d'entrée (6) du carter (5) et les canaux d'amenée et d'évacuation des gaz d'échappement (1a, 1b), entre les canaux d'amenée et d'évacuation des gaz d'échappement (1 a, 1 b) et une face frontale de sortie (7) du carter (5) et/ou dans les canaux d'amenée et/ou d'évacuation des gaz d'échappement (1a, 1b), et/ou les canaux d'amenée et/ou d'évacuation des gaz d'échappement (1a, 1b) présentent un revêtement catalytique, et/ou un matériau poreux, dans lequel les canaux d'amenée et/ou d'évacuation des gaz d'échappement (1 a, 1 b) sont disposés au moins en partie, présente un matériau catalytique.

14. Procédé permettant de faire fonctionner un dispositif d'épuration des gaz d'échappement selon l'une quelconque des revendications 1 à 13, **caractérisé en ce que** ce procédé comprend les étapes consistant à :
- détecter la nécessité de la combustion de la suie,
- augmenter la température à l'intérieur du carter (5) et
- mettre fin à cette combustion de la suie.

15. Procédé permettant de faire fonctionner un dispositif d'épuration des gaz d'échappement selon la revendication 14, **caractérisé en ce que** les dispositifs de chauffage (9.1 à 9.4) sont chauffés dans un ordre prédéfini afin de brûler la suie.

16. Procédé permettant de faire fonctionner un dispositif d'épuration des gaz d'échappement selon l'une quelconque des revendications 14 ou 15, **caractérisé en ce qu'**une substance contenant de l'oxygène ou libérant de l'oxygène, de préférence de l'air ou de l'oxygène, est ajoutée aux gaz d'échappement avant ou pendant leur entrée dans les canaux d'amenée des gaz d'échappement.

17. Procédé permettant de produire un dispositif d'épuration des gaz d'échappement selon l'une quelconque des revendications 1 à 13, **caractérisé en ce qu'**il comprend les étapes consistant à :
- mettre en place les canaux d'amenée et d'évacuation des gaz d'échappement (1a et 1b)
- introduire de la mousse céramique (14) dans l'espace intermédiaire entre les canaux d'amenée et d'évacuation des gaz d'échappement et dans le carter (5),
- faire durcir la mousse céramique (14).

18. Procédé permettant de produire un dispositif d'épuration des gaz d'échappement selon la revendication 17, **caractérisé en ce que** les dispositifs de chauffage (9) sont utilisés et chauffés pour faire durcir la mousse céramique (14).
